Europäisches Patentamt

European Patent Office

Office européen des brevets

(11) Publication number: **0 659 776 A1**

## EUROPEAN PATENT APPLICATION

(21) Application number: **93203667.6**

(51) Int. Cl.6: **C08F 14/06**

(22) Date of filing: **23.12.93**

(43) Date of publication of application:
**28.06.95 Bulletin 95/26**

(84) Designated Contracting States:
**GB**

(71) Applicant: **SHELL INTERNATIONALE RESEARCH MAATSCHAPPIJ B.V.**
**Carel van Bylandtlaan 30**
**NL-2596 HR Den Haag (NL)**

(72) Inventor: **Berndt, Harald Walter**
**Avenue Jean Monnet 1**
**B-1348 Ottignies,**
**Louvain-La-Neuve (BE)**
Inventor: **Onderwater, Martinus Gerardus Adrianus**
**Badhuisweg 3**
**NL-1031 CM Amsterdam (NL)**
Inventor: **Wilmer, Ronald Gerardus Bonivatius**
**Avenue Jean Monnet 1**
**B-1348 Ottignies,**
**Louvain-La-Neuve (BE)**
Inventor: **Segers, Rumoldus Adrianus Petrus Maria**
**Avenue Jean Monnet 1**
**B-1348 Ottignies,**
**Louvain-La-Neuve (BE)**
Inventor: **Vanduffel, Koen Antoon Kornelis**
**Avenue Jean Monnet 1**
**B-1348 Ottignies,**
**Louvain-La-Neuve (BE)**

(54) **Process for preparing PVC particles with improved size distribution.**

(57) A process for preparing a polymer of a vinyl chloride monomer with improved particle size distribution by polymerising the vinyl chloride monomer under suspension conditions at a given stirring velocity and a specific power input in the range of 0.50 to 2.0 W/kg, characterised in that initially a reduced stirring velocity of 70 to 90% (rpm/rpm) relative to the given stirring velocity is applied until at least 1%wt but no more than 15%wt of the vinyl chloride monomer is polymerised, whereupon polymerisation is continued at the given stirring velocity.

EP 0 659 776 A1

The invention relates to a process for preparing a polymer of a vinyl chloride monomer with improved particle size distribution. In particular, the invention relates to a process for preparing a polymer of a vinyl chloride monomer (hereinafter "VCM") under suspension conditions at a given stirring velocity.

Polyvinyl chloride (hereinafter "PVC", although also referring to copolymers of VCM unless otherwise indicated) is commonly prepared by suspension polymerisation of VCM in a stirred reactor. In commercial PVC plants, PVC particles are produced that generally have a particle size ranging from 20 to 500 micrometer. The particle size, and the particle size distribution, depends in particular on the reactor geometry, the type of stirrer, the additives used and the polymerisation conditions applied. Commercial PVC grades are sold with certain specifications, one of which is the fraction of particles greater than 250 micrometer. Of similar importance is the average and/or the mean particle size, and the bulk density of the PVC. The fraction of particles greater than 250 micrometer should be as small as possible. The bulk density is preferably about 0.5 kg/l or more.

Generally, in commercial PVC grades, the fraction of PVC particles greater than 250 micrometer is removed by sieving and/or by similar techniques. This means that part of the PVC particles is wasted. Alternatively, the polymerisation recipe (e.g., the amounts of stabilisers used, etc.) is changed to produce PVC with a smaller average particle size, however at the detriment of the polymer properties (bulk density in particular).

From DE-A-1,076,373 it is known that PVC particles of small particle size may be produced by polymerising the VCM at an initial high stirring velocity, followed by stirring at reduced velocity until the polymerisation reaction is complete.

From US-A-3,682,877 it is known that PVC of a predetermined particle size distribution and apparent density may be obtained by varying at least once the initial stirring velocity in the reactor during polymerisation. Thus, either the initial stirring velocity is subsequently increased with the resulting formation of a final polymer containing an increased proportion of coarse particles, or it is reduced with the resulting formation of a final polymer containing an increased proportion of fine particles. The skilled man would therefore believe the solution to the problem of reducing the formation of coarse particles (i.e., particles having a size in excess of 250 micrometer) to reside in applying an initial, high stirring velocity, which is subsequently reduced.

Finally, from EP-A-0,508,349 too, the skilled reader learns that improvement of particle size distribution is obtained by subsequent reduction of the stirring velocity.

The present inventors set out to reduce the formation of particles greater than 250 micrometer, without adversely affecting the properties of the PVC. Moreover, such improvement should be readily applicable in common PVC plants, without additional capital investment, change of polymerisation recipe, or reduction in production rate.

Surprisingly, the inventors found that commercial grade PVC, but also related copolymers from VCM and compatible monomers, could be prepared with a reduced formation of particles greater than 250 micrometer, by (after a certain part of the VCM was polymerised) increasing instead of reducing the initial stirring velocity (in rotations per minute, hereinafter "rpm"). In other words, the invention provides a process for preparing a polymer of a vinyl chloride monomer with improved particle size distribution by polymerising the vinyl chloride monomer under suspension conditions at a given stirring velocity and a specific power input in the range of 0.50 to 2.0 W/kg, characterised in that initially a reduced stirring velocity of 70 to 90% (rpm/rpm) relative to the given stirring velocity is applied until at least 1%wt but no more than 15%wt of the vinyl chloride monomer is polymerised, whereupon polymerisation is continued at the given stirring velocity.

Those skilled in the art, will recognise that the range of 0.50 W/kg to 2.0 W/kg for the specific power input is commonly found in the production of PVC, and is more or less independent on the reactor size and geometry and the type of stirrer used. The type of stirrer for agitating the polymerisation mixture is suitably a conventional one such as a paddle stirrer, a Pfaudler stirrer, a propeller stirrer and the like.

Suitably, the given stirring velocity is in the range of 800 to 65 rotations per minute, depending on reactor size and geometry. Likewise, the initial stirring velocity is suitably maintained until at least 2.5%, but less than 6% of the vinyl chloride monomer is polymerised.

It should be realised that although the reactor geometry and the type of stirrer play an important role for the optimum conditions, more or less substantial improvements in the particle size distribution are achieved independent of these variables. Likewise, the common additives used will effect the properties of the product, however, again the effect may be achieved independent of these variables. Common additives are, for instance, chain transfer agents, suspending agents, and compounding agents. Suitable suspending agents are known in the art and include, for instance, maleic anhydride-vinyl acetate copolymers, urea-formaldehyde condensation products, precipitated inorganic carbonates, phosphates and silicates, water-soluble cellulose derivatives, and methacrylic acid copolymers (see Kirk-Othmer Encyclopedia of Chemical Technology 3rd. ed., Vol. 23, 3rd. pp 903-906). Thus, partially hydrolyzed poly(vinyl acetate) (PVAc), having a degree of hydrolysis in the range of 50 to 90 mol%, and a molecular weight (Mw) in the range of 10.000 to 250.000 g/mol and blends thereof are suitably used, also in the present process. Suitable compounding agents are heat stabilizers, lubricants, plasticizers, pigments and colorants, fillers biocides, impact modifiers, processing aids, and flame retardants (Kirk-Othmer, pp 911-915).

Preferably, the process is applied for making the homopolymer, PVC, although also copolymers of the vinyl chloride monomer and a compatible monomer may be prepared.

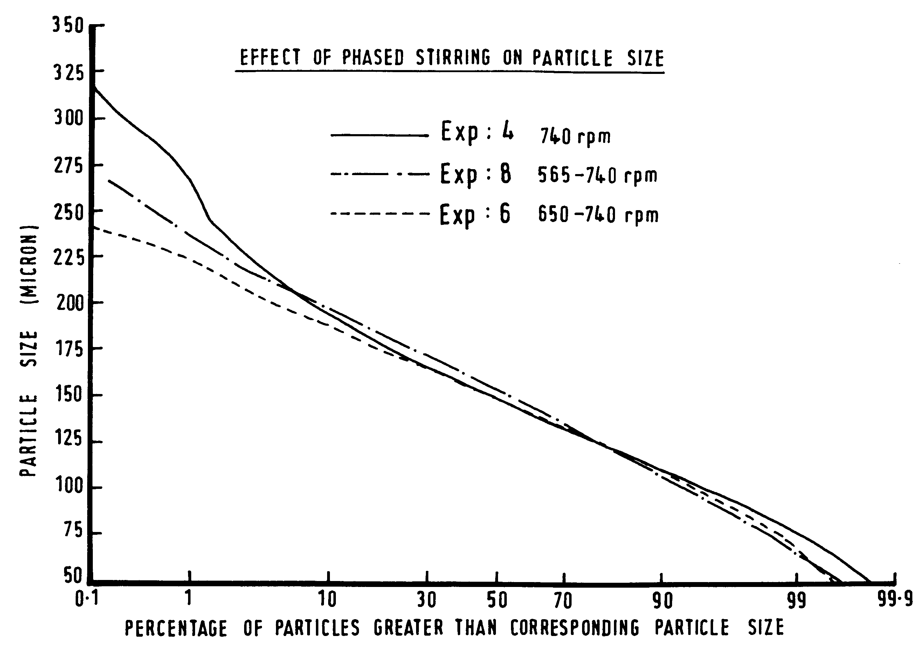

The inventors were indeed quite surprised by the successfulness, since (as was to be expected from the art) increased median and average particle sizes were found. Only by analysing particle size distributions in detail, the inventors understood that such distributions were more or less skewed (tailing in respect of coarse particles). By phased stirring such as disclosed in the process of the present invention, this skewed particle size distribution was replaced with a more Gaussian particle size distribution (with less tailing in respect of coarse particles). The more skewed the initial particle size distribution was, the more pronounced was the improvement found. This effect, and the relevance thereof, is illustrated in Figure 1, corresponding to the Examples and Comparative examples disclosed hereinafter. Thus, Figure 1 represents the skewed particle size distribution when stirred at 740 rpm, as well as particle size distributions obtained by applying the process of the invention. The latter have a more Gaussian distribution, which is illustrated by a straight line when plotting the data on a log-axis. It may be observed that although the average and median particle size of the PVC prepared in accordance with the invention are increased, the fraction having a particle size greater than 250 micrometer is reduced.

If the initial stirring at reduced velocity is not continued until at least 1%wt of the VCM is polymerised (about 15 minutes for a standard PVC suspension process) and/or the initial stirring velocity is more than 90% (rpm/rpm) relative to the given stirring velocity, no substantial improvement is found (see the Table). If the initial stirring at reduced velocity is continued for longer than the time required to polymerise 15% of the VCM and/or the initial stirring velocity is less than 70% (rpm/rpm) relative to the given stirring velocity, the fraction of particles having a particle size larger than 250 micrometer increases.

Within the window of stirring conditions in accordance with the present invention and the preferred embodiments thereof, the skilled man will have no difficulty in finding those conditions that produce the best results in his or her process. Thus, optimal stirring conditions will slightly depend on the reactor, stirrer, and standard stirring velocity applied, as well as the monomer mixture (comonomers) and additive composition used.

The following examples further elucidate the invention.

Example 1

In a stainless steel polymerisation reactor equipped with one baffle, having a capacity of 9.5 litres and equipped with a stirrer with 2 paddle-type impellers was charged with 3.8 kg of demineralized water containing 1.63 g of a blend of PVAc's having on average a degree of hydrolysis of 78.6 mol% and a molecular weight in the range of 10.000 to 220.000 g/mol. To the aqueous solution a buffer was added. The reactor was closed and evacuated to a reduced pressure of 5 kPa (38 mm Hg) at ambient temperatures.

The contents of the reactor were heated to 40 °C upon slow stirring, whereupon 2.3 kg of VCM was added to the reactor. Once 43 °C had been reached, 1.54 g of initiator was added yielding a reaction time of about 340 minutes. The stirrer velocity was set to the initial stirrer velocity and the reactor contents were brought to 57 °C (i.e., the polymerisation temperature) in about 24 minutes. After a certain time the stirrer velocity was increased to the final stirrer velocity (740 rpm commensurate with 1.2 W/kg).

The mean particle size and the fraction of particles greater than 250 microns were determined using a Coulter Counter. The bulk density was measured according to ISO-60-1977. The results are given in the Table.

Experiment 1 is used for comparative purposes. No phased stirring was applied in this experiment. Experiment 2 was done with phased stirring for 15 minutes at 80% of final stirrer velocity. At these conditions there has only been a slight effect on the amount of coarse particles. Experiment 3 was done at 76% of final stirrer velocity for 30 minutes. The amount of coarse material decreased substantially.

Example 2

Example 1 was repeated, however, using 1.44 g of a blend of PVAc's having on average a degree of hydrolysis of 76.0 mol% and a molecular weight in the range of 10.000 to 220.000 g/mol.

Experiment 4 is used for comparative purposes. No phased stirring was applied in this experiment. Experiments 5 to 7 were done at 87% of final stirring velocity for 15, 30 and 45 minutes respectively. As can be seen, the effect of phased stirring is not clearly evident at 15 minutes, but at 30 minutes the amount of coarse material has been substantially reduced. Experiment 7 shows that when continuing initial stirring velocity for a too long period, the mean particle size increases too much and although the particle size distribution is still Gaussian, the amount of coarse material starts increasing again. As illustrated by Experiment 8, if the phased stirring is carried out at too low an initial stirring velocity, then the fraction of coarse material starts increasing again. Experiments 4, 6 and 8 have been graphically depicted in the Figure.

Examining the results of the (comparative) experiments, it will be clear that not only a substantial reduction in the amount of waste material is achieved, but also a gain in bulk density is observed, without a loss of other valuable PVC properties or at the cost of equipment modifications.

TABLE

| Experiment No. | 1 | 2 | 3 | 4 | 5 | 6 | 7 | 8 |
|---|---|---|---|---|---|---|---|---|
| Initial stirrer velocity, (rpm) | 740 | 592 | 565 | 740 | 650 | 650 | 650 | 565 |
| Final stirrer velocity, (rpm) | 740 | 740 | 740 | 740 | 740 | 740 | 740 | 740 |
| Duration of lower stirring velocity, (min) | 0 | 15 | 30 | 0 | 15 | 30 | 45 | 30 |
| Conversion at change of stirring velocity (%) | 0.0 | 1.0 | 2.5 | 0.0 | 1.0 | 2.5 | 6.0 | 2.5 |
| Mean particle size ($\mu$m) | 154 | 156 | 164 | 147 | 140 | 148 | 156 | 152 |
| Particles > 250 $\mu$m (% m/m) | 3.6 | 2.9 | 1.4 | 0.9 | 0.8 | 0.0 | 0.1 | 0.4 |
| Bulk density (kg/l) | 0.514 | 0.522 | 0.525 | 0.531 | 0.530 | 0.547 | 0.546 | 0.551 |

Experiments 1 and 4 are comparative. Experiments 4-8 have been carried out using a different amount of partially hydrolysed polyvinyl acetate.

## Claims

1. A process for preparing a polymer of a vinyl chloride monomer with improved particle size distribution by polymerising the vinyl chloride monomer under suspension conditions at a given stirring velocity and a specific power input in the range of 0.50 to 2.0 W/kg, characterised in that initially a reduced stirring velocity of 70 to 90% (rpm/rpm) relative to the given stirring velocity is applied until at least 1%wt but no more than 15%wt of the vinyl chloride monomer is polymerised, whereupon polymerisation is continued at the given stirring velocity.

2. A process as claimed in claim 1, wherein the given stirring velocity is in the range of 800 to 65 rotations per minute.

3. A process as claimed in claim 1 or 2, wherein the initial stirring velocity is maintained until at least 2.5% of the vinyl chloride monomer is polymerised.

4. A process as claimed in any one of claims 1 to 3, wherein the initial stirring velocity is maintained for a period of time less than required for polymerising 6% of the vinyl chloride monomer.

5. A process as claimed in any one of claims 1 to 4, wherein the polymer is polyvinyl chloride.

6. A process as claimed in claim 5, wherein the polymer has a bulk density of at least 0.5 kg/l.

7. A process as claimed in any one of claims 1 to 6, wherein the stirrer is a paddle stirrer, a Pfaudler stirrer, or a propeller stirrer.

8. A polymer prepared by polymerising vinyl chloride monomer under suspension conditions by the process of any one of claims 1 to 7, having a Gaussian particle size distribution.

9. A polymer as claimed in claim 8, having substantially no particles greater than 250 micrometer.

EFFECT OF PHASED STIRRING ON PARTICLE SIZE

Exp : 4   740 rpm
Exp : 8   565 – 740 rpm
Exp : 6   650 – 740 rpm

PERCENTAGE OF PARTICLES GREATER THAN CORRESPONDING PARTICLE SIZE

PARTICLE  SIZE  (MICRON)

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X,D | US-A-3 682 877 (A. CZEKAY AND AL.) <br> * example 11 * | 1-9 | C08F14/06 |
| A,D | DE-A-10 76 373 (HOECHST AG) | 1 | |
| A | CHEMICAL ABSTRACTS, vol. 91, no. 8, <br> 20 August 1979, Columbus, Ohio, US; <br> abstract no. 57828j, <br> page 21 ; <br> * abstract * <br> & DD-A-133 096 (VEB CHEMISCHE WERKE BUNA) <br> 6 December 1977 | 1 | |
| X | DATABASE CHEMICAL ABSTRACTS (HOST:STN): <br> CA118(24): 234 819f, Colombus, OH, US; <br> Jian LI <br> et al.: "calculation of relaxation time <br> distribution of alpha-peak in PVC with <br> gaussian <br> distribution", WULI XUEBAO, 41(5), <br> 814-818, 1992, CHINA. | 8,9 | |
| X | FR-A-2 152 506 (SHIN-ETSU CHEM. CO.) <br> * the whole document * | 8,9 | TECHNICAL FIELDS SEARCHED (Int.Cl.6) <br><br> C08F |
| X | FR-A-2 158 262 (SUMITOMO CHEM. CO.) <br> * the whole document * | 8,9 | |

The present search report has been drawn up for all claims

| Place of search | Date of completion of the search | Examiner |
|---|---|---|
| THE HAGUE | 24 May 1994 | Glikman, J-F |